(19) Europäisches Patentamt
European Patent Office
Office européen des brevets

(11) **EP 2 233 954 A1**

(12) **EUROPEAN PATENT APPLICATION**

(43) Date of publication:
**29.09.2010 Bulletin 2010/39**

(51) Int Cl.:
***G02B 6/38*** (2006.01)

(21) Application number: **10250501.3**

(22) Date of filing: **18.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(30) Priority: **25.03.2009 JP 2009073438**

(71) Applicant: **BROTHER KOGYO KABUSHIKI
KAISHA
Aichi-ken 467-8561 (JP)**

(72) Inventors:
• **Kuriki, Yuichiro
Nagoya-shi
aichi 467-8562 (JP)**
• **Tanaka, Mitsugi
Nagoya-shi
Aichi 467-8562 (JP)**

(74) Representative: **Jackson, Martin Peter
J.A. Kemp & Co.
14 South Square
Gray's Inn
London WC1R 5JJ (GB)**

(54) **Ferrule connecting structure**

(57)    A ferrule connecting structure (1) for optically connecting a pair of fibers (28a,b) which are provided in a pair of ferrules (2a,2b), respectively, the ferrule connecting structure comprises: a first holding portion (3) which holds the pair of ferrules; a peripheral portion (8a, 8b) which is provided on the pair of ferrules and which includes a plurality of groove portions (11a,11b); a second holding portion (15a,15b) which is fit in the groove portion so as to hold the ferrule in a particular rotating position about an axis (Ax) of the optical fiber; a third holding portion (13) which is detachably attached to the first holding portion so as to press the first holding portion in a direction intersecting with the axis; and a fourth holding portion (14) which presses the pair of ferrules in a direction in which the end faces of the pair of ferrules are opposed to each other.

*FIG. 1A*

## Description

### BACKGROUND

The present invention relates to a ferrule connecting structure for use in connecting a pair of optical fibers. In the ferrule connecting structure, ferrules in which the optical fibers are provided individually are opposed to each other and connected with each other.

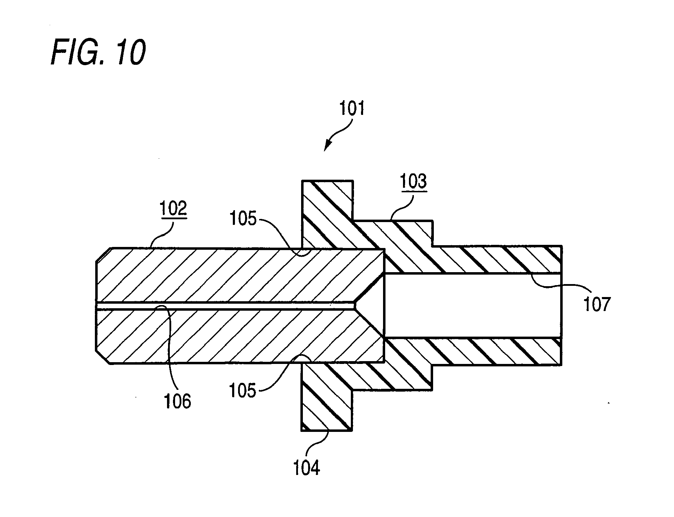

An example of a conventional ferrule is shown in Fig. 10. Conventionally, a ferrule 101 includes, as shown in Fig. 10, a centering portion 102, a cylindrical body 103 and a flange portion 104 which is formed on the body. The body 103 includes a press fit opening 105 into which the centering portion 102 is press fitted. An optical fiber is exposed only by a predetermined length with a jacket at a leading end thereof stripped off. The exposed optical fiber stock is inserted into an optical fiber insertion hole 106. A jacketed optical fiber cable is inserted into an optical fiber cable insertion hole 107.

As disclosed in JP-A-2001-215360, normally, an optical connector used in the field of communication includes a split sleeve. An optical fiber is provided in each of a pair of ferrules 101. Centering portions 102 of the ferrules 101 are aligned in an axial direction within the split sleeve. End faces of the centering portions 102 are opposed to each other and connected with each other. Then, a working person fits a rotating tool in rotational tool receiving cutouts provided on a flange portion 104 with the pair of ferrules opposed to each other and connected with each other in the split sleeve. Then, by rotating the rotating tool, the eccentricity of one with respect to the other of the pair of optical fibers is minutely adjusted. The pair of optical fibers are connected together concentrically by connecting and aligning one with the other of the pair of optical fibers. The split sleeve is forcibly expanded by the centering portion 102 of each ferrule 101. Then, the split sleeve exhibits an elastic restoring force and supports the ferrules 101 under the elastic restoring force.

### SUMMARY

However, only with the pair of ferrules 101 simply supported by the slit sleeve, in the event that the connecting portion between the pair of ferrules 101 is loosened even a little after assemblage, there is caused a problem that it becomes difficult to obtain high light coupling efficiency.

In this case, bonding the connecting portion between the pair of ferrules 101 is considered as a solution. However, in the event that the connecting portion between the pair of ferrules 101 is bonded, the following problems are caused. In the event that part of an apparatus which utilizes the ferrule connection mechanism fails, a portion or device of the apparatus which is coupled to the ferrules 101 or ferrules 101 need to be replaced. As this occurs, firstly, the working person needs to cut apart once the ferrules 101. Next, the working person needs to insert new optical fibers through the ferrules 101. Then, the working person needs to bond a connecting portion of a pair of ferrules 101 again. In this way, some labor hours are required to replace devices coupled to ferrules or ferrules themselves.

The invention has been made with a view to solving the problem. An object of the invention is to provide a ferrule connecting structure which requires as few labor hours as possible in replacing devices coupled to ferrules or ferrules themselves. In addition, another object of the invention is to provide a ferrule connecting structure which can maintain a holding condition of ferrules after assemblage of the ferrule connecting structure in an ensured fashion and can maintain high light coupling efficiency.

In order to achieve the object, one aspect of the invention provides a ferrule connecting structure for optically connecting a pair of fibers which are provided in a pair of ferrules, respectively, the ferrule connecting structure comprising a first holding portion, an peripheral portion, a second holding portion, a third holding portion and a fourth holding portion. The first holding portion holds the pair of ferrules in a state that end faces of the pair of ferrules are opposed to each other and connected with each other. The peripheral portion is provided on at least one of the pair of ferrules and which includes a peripheral surface on which a plurality of groove portions are formed. The second holding portion is configured to fit in the groove portion so as to hole a rotating position of the ferrule about an axis of the optical fiber. The third holding portion is configured to be detachably attached to the first holding portion so as to press the first holding portion by elastic force in a direction intersecting with the axis. The fourth holding portion presses the pair of ferrules in a direction in which the end faces of the pair of ferrules approach each other by elastic force.

A second aspect of the invention provides the ferrule connecting structure according to the first aspect, wherein the peripheral surface of the peripheral portion has a shape in which the plurality of groove portions and a plurality of projecting portions are formed alternately.

A third aspect of the invention provides the ferrule connecting structure according to the second aspect, wherein the number of the plurality of groove portions is predetermined based on an light coupling efficiency of the optical fibers.

A fourth aspect of the invention provides the ferrule connecting structure according to the first aspect, wherein the peripheral portion is provided on both of the pair of ferrules.

A fifth aspect of the invention provides the ferrule connecting structure according to the first aspect, wherein the third holding portion includes an accommodating portion having an accommodating space for accommodating the first holding portion, and
the accommodating portion comprises:

a first plate portion which has a first surface, wherein the first surface extends along the axis and is configured to contact with a peripheral surface of the first holding portion;
a second plate portion which has a second surface, wherein the second surface stands on one side end of the first plate portion, wherein the second surface extends along the axis, and wherein the second surface is configured to contact with the peripheral surface of the fist holding portion; and
a third plate portion which has a curved surface, wherein the curved surface stands on the other side end of the first plate portion, wherein the curved surface projects toward the second surface, and wherein the curved surface extends along the axis, and wherein the curved surface is configured to contact with the peripheral surface of the first holding portion.

A sixth aspect of the invention provides the ferrule connecting structure according to the fifth aspect, wherein the fourth holding portion includes:

a pair of extending portions which extend from both sides of the accommodating portion along the axis; and
a pair of pressing pieces which stands on the pair of extending portions respectively, wherein the pair of pressing pieces is configured to contact with side surfaces of the pair of peripheral portions to press the pair of peripheral portions provided on both of the pair of ferrules in the direction in which end faces of the pair of ferrules are opposed to each other, and
each of the pair of pressing pieces includes a cutout portion which permits insertion of the ferrule when the first holding portion is accommodated within the accommodating space.

A seventh aspect of the invention provides the ferrule connecting structure according to the sixth aspect, wherein the extending portion includes a confronting portion which confronts the groove portion when the third holding portion is accommodated in the accommodating space ,and
the second holding portion includes a protrusion which is formed on the confronting surface of the extending portion, and wherein the protrusion is configured to fit in the groove portion.

An eighth aspect of the invention provides the ferrule connecting structure according to the fifth aspect, wherein the peripheral portions are provided on both of the pair of ferrules, respectively, and
the second holding portion, the third holding portion and the fourth holding portion are combined as an unit.

A ninth aspect of the invention provides the ferrule connecting structure according to the first aspect, wherein the first holding portion is a split sleeve.

A tenth aspect of the invention provides the ferrule connecting structure according to the first aspect, wherein the third holding portion presses the first holding portion in a direction perpendicular to the axis.

An eleventh aspect of the invention provides the ferrule connecting structure according to the fifth aspect, wherein
the first surface extends parallel to the axis,
the second surface is perpendicular to the first surface, and wherein the second surface extends parallel to the axis, and the curved surface extends parallel to the axis.

BRIEF DESCRIPTION OF THE DRAWINGS

Fig. 1A is a perspective view showing an external appearance of a ferrule connecting structure 1 according to an embodiment of the invention.
Fig. 1B is a front view showing the external appearance of the ferrule connecting structure 1.
Fig. 2 is a sectional view of a ferrule 2a according to the embodiment.
Fig. 3 is a partially cutaway perspective view showing a flange 8a alone which is removed from a body 5a according to the embodiment.
Fig. 4A is a perspective view of a clamp 4 according to the embodiment.
Fig. 4B is a side view of the clamp 4.
Fig. 4C is a front view of the clamp 4.
Fig. 5 is an explanatory diagram which explains an elastic force exerted on a split sleeve 3 when the split sleeve 3 is accommodated within an accommodating space 19.
Fig. 6 is a sectional view of the ferrule connecting structure 1 taken along the line A-A shown in Fig. 1(b).

Fig. 7A is a diagram showing a condition in which a pair of ferrules 2a, 2b according to the embodiment are opposed to and connected with each other within the split sleeve 3.

Fig. 7B is an explanatory diagram which explains a relationship between an angle θ from a core center Mb of an optical fiber 28b to a core center Ma of an optical fiber 28a of the embodiment and an axis deviation amount between the pair of optical fibers.

Fig. 7C is an explanatory diagram which explains a measuring system of a connection loss CL according to the embodiment.

Fig. 8 is an explanatory diagram which explains a positional relationship between a flange 8b according to the embodiment and the optical fibers 28a, 28b.

Fig. 9 is a graph showing a relationship between light coupling efficiency CE according to the embodiment and grooves 11a, 11b.

Fig. 10 is a sectional view of a conventional ferrule 101.

DESCRIPTION OF EXEMPLARY EMBODIMENTS

Hereinafter, an embodiment of the invention will be described with reference to the drawings.

External Appearance of Ferrule connecting structure

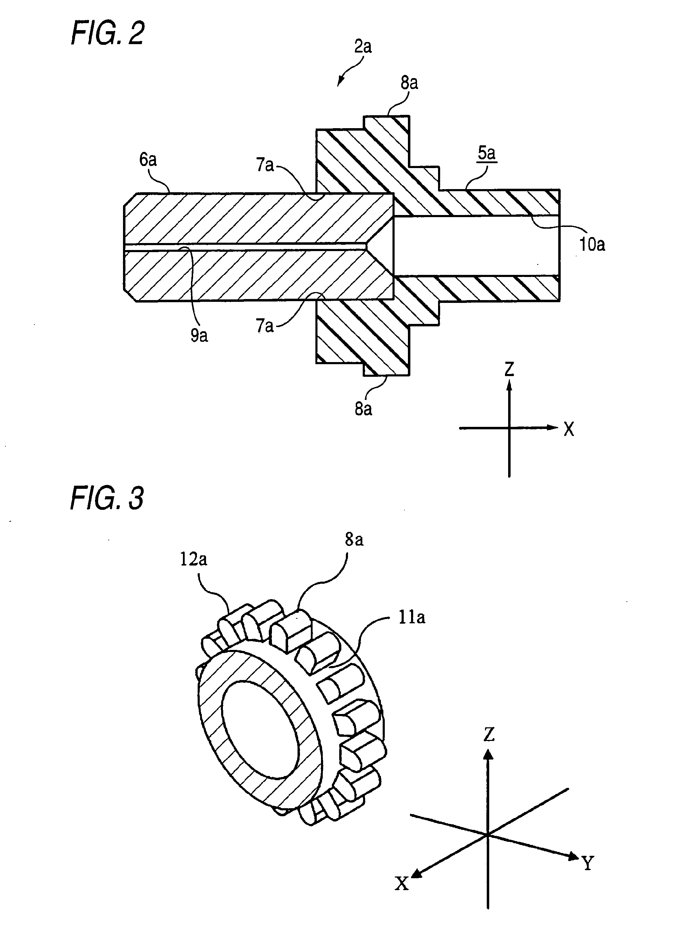

Referring to the drawings, an external appearance of a ferrule connecting structure 1 according to an embodiment of the invention will be described. Although Fig. 3 shows only one flange 8a, a flange 8b has the same construction as that of the flange 8a.

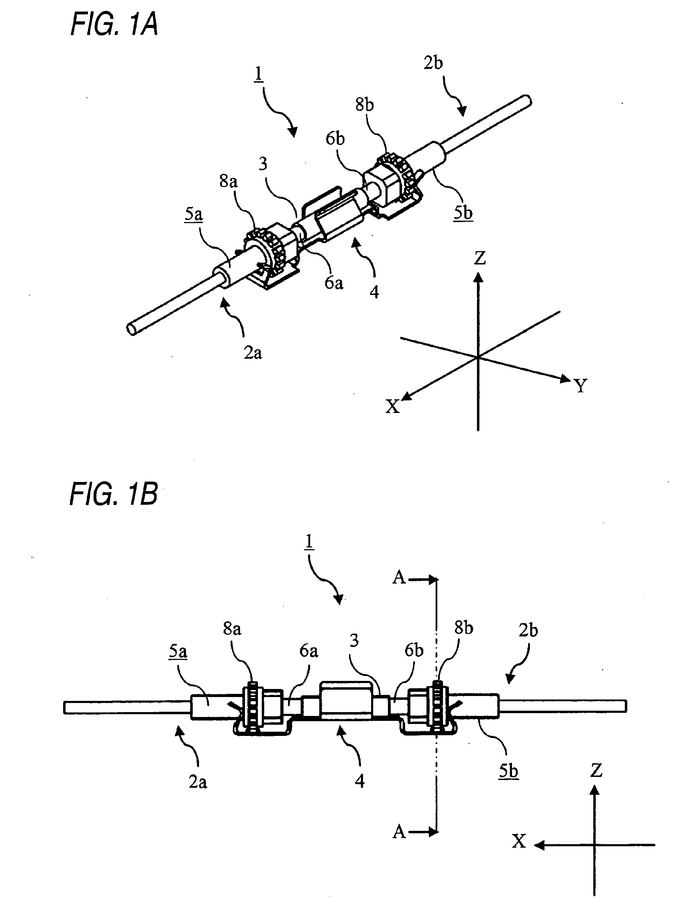

As shown in Figs. 1A, 1B, the ferrule connecting structure 1 includes a pair of ferrules 2a, 2b, a split sleeve 3 and a clamp 4. Hereinafter, for the sake of simplification, as shown in Fig. 1A, an axial direction of a pair of ferrules 2a, 2b is defined as X axis, and directions which intersects with X axis as Y axis and Z axis. The definition of the directions of X axis, Y axis and Z axis is understood to be common with respect to the other drawings.

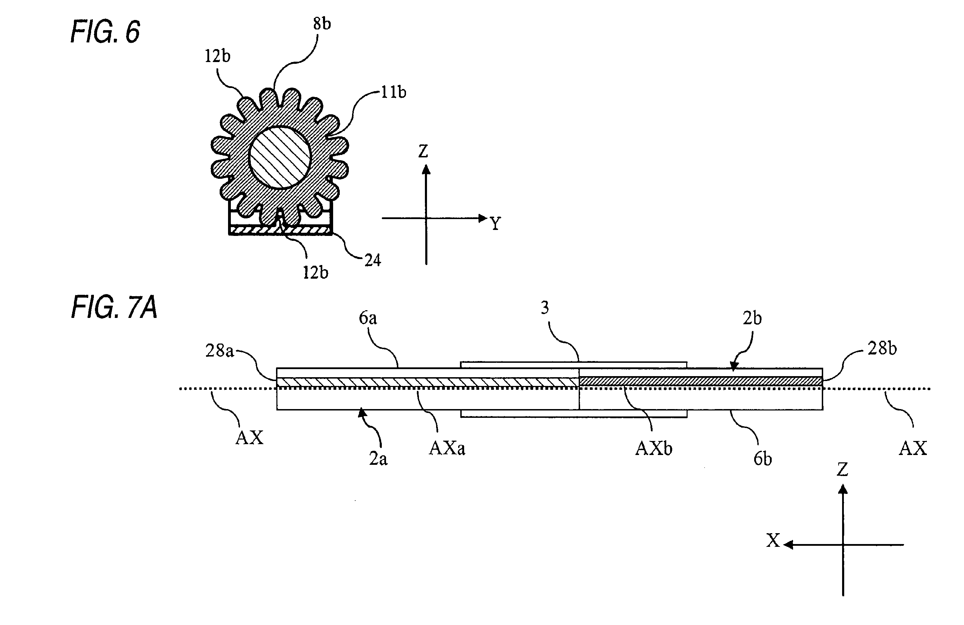

The pair of ferrules 2a, 2b includes bodies 5a, 5b and centering portions 6a, 6b. The bodies 5a, 5b are made of a stainless steel, and the centering portions 6a, 6b are made of zirconia. As shown in Figs. 1A, 1B, the pair of ferrules 2a, 2b are connected in such a state that end faces of the centering portions 6a, 6b are connected with each other within the split sleeve 3. As shown in Fig. 2, the body 5a includes a press fit opening 7a in which the centering portion 6a is press fitted. As shown in Figs. 1A, 1B and 2, the body 5a includes a flange 8a. As shown in Fig. 2, the centering portion 6a includes an optical fiber insertion hole 9a through which an optical fiber stock is inserted. The body 5a includes an optical fiber cable insertion hole 10a through which a jacketed optical fiber cable is inserted. As shown in Fig. 3, the flange 8a has a gearwheel shape in which grooves 11a and projecting portions 12 are aligned alternately along an outer circumference of the flange 8a. As with the centering portion 6a, the centering portion 6b includes an optical fiber insertion hole through which an optical fiber stock is inserted. As with the body 5a, the body 5b also includes a press fit opening in which the centering portion 6b is press fitted and includes a flange 8b and an optical fiber cable insertion hole through which an optical fiber cable is inserted. As with the flange 8a, the flange 8b has, as shown in Fig. 6, a gearwheel shape in which grooves 11b and projecting portions 12b are aligned alternately along an outer circumference thereof.

The split sleeve 3 has a configuration in which a longitudinal slit is provided in a cylindrical tube. The split sleeve is made of zirconia and has elasticity. The split sleeve wraps a portion where the centering portions 6a, 6b of the pair of ferrules 2a, 2b are opposed to each other and connected with each other. Then, when the split sleeve 3 wraps to hold the portion where the centering portions 6a, 6b are so connected, an inside diameter portion of the split sleeve 3 is elastically deformed so as to forcibly be expanded and maintains the condition in which the pair of ferrules 2a, 2b are opposed to each other and connected with each other by virtue of elastic force thereof.

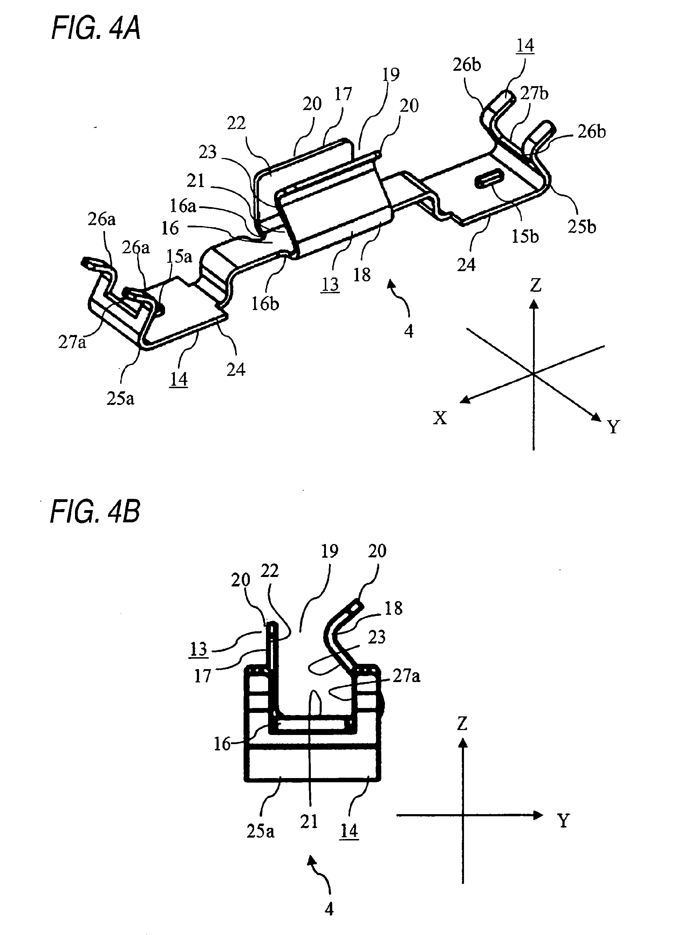

The clamp 4 includes, as shown in Fig. 4A, a holding portion 13, a pressing portion 14 and protrusions 15a, 15b. The clamp 4 is made of iron and has elasticity. The clamp 4 is formed through pressing.

The holding portion 13 includes a first plate portion 16, a second plate portion 17 and a third plate portion 18. The first plate portion 16, the second plate portion 17 and the third plate portion 18 form an accommodating space 19 which can accommodate therein the split sleeve 3. The split sleeve 3 is accommodated in the accommodating space 19 through open end portions 20.

The first plate portion 16 includes a first flat surface 21 which extends parallel to an X axis. The first flat surface 21 contacts with a peripheral surface of the split sleeve 3 when the split sleeve 3 is accommodated in the accommodating space 19. The second plate portion 17 includes a second flat surface 22 which is formed to stand vertically on one side end 16a of the first plate portion 16. The second flat surface 22 is configured to contact with the circumferential surface of the split sleeve 3 when the split sleeve 3 is accommodated in the accommodating space 19. The third plate portion 18 stands on the other side end 16b of the first plate portion 16 to project towards the second plate portion 17. The third plate portion 18 includes a curved surface 23 which extends parallel to the X axis. The curved surface 23 projects towards the second plate portion 17 and contacts with the peripheral surface of the split sleeve 3 when the split sleeve 3 is accommodated within the accommodating space 19.

The operation and function of the holding portion 13 when the split sleeve 3 is accommodated in the accommodating space 19 through the open end portions 20 will be described. When the split sleeve 3 is accommodated within the accommodating space 19, the first flat surface 21 and the second flat surface 22 function as a reference plane and the position of the split sleeve 3 within the accommodating space 19 is determined. The third plate portion 18 is elastically deformed to expand in a direction at right angles to the X axis when the split sleeve 2 is accommodated in the accommodating space 19. As this occurs, the curved surface 23 contacts with the peripheral surface of the split sleeve 3.. Then, with the split sleeve 3 accommodated completely in the accommodating space 19, elastic force works, and the third plate portion 18 moves to be returned to its initial condition.

The pair of ferrules 2a, 2b are opposed to each other and connected with each other within the sleeve 3, and as shown in Fig. 7A, an axis AXa of the ferrule 2a and an axis AXb of the ferrule 2b coincide with each other to constitute a single axis AX. When the split sleeve 3 is accommodated completely in the accommodating space 19, the split sleeve 3 is pressed towards the X axis, that is, in a direction VT perpendicular to the AX of the pair of ferrules 2a, 2b by the elastic force of the third plate portion 18 while in abutment with the curved surface 23 and is held in that position.

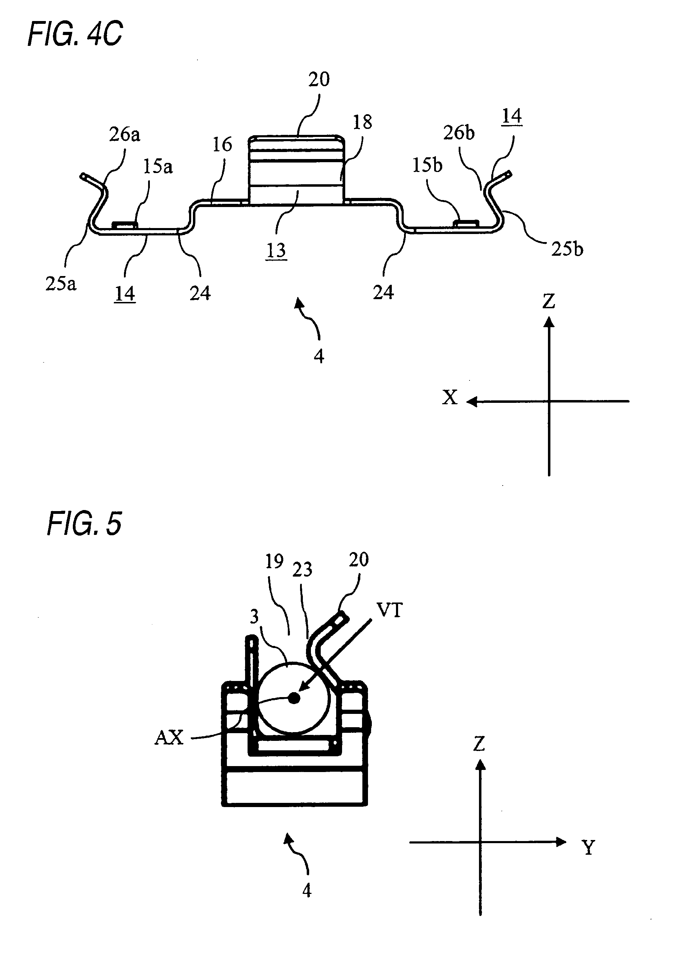

As shown in Fig. 4C, the pressing portion 14 includes extending portions 24 and pressing pieces 25a, 25b. The extending portions 24 extend in the X-axis direction from opposite sides in the X-axis direction of the holding portion 13 while being bent into a step-like configuration. The pressing pieces 25a, 25b are formed to stand on the extending portions 24. As shown in Figs. 4A, 4B, the pressing pieces 25a, 25b include projecting portions 26a, 26b and cutout portions 27a, 27b, respectively. As shown in Fig. 4A, the projecting portions 26a, 26b each have a shape in which each projecting portion is bifurcated at its free end side. As shown in Fig. 4A, the cutout portions 27a, 27b are formed between bifurcated free end portions of the projecting portions 26a, 26b, respectively.

The operation and function of the pressing portion 14 will be described when the split sleeve 3 is accommodated in the accommodating space 19 with the pair of ferrules connected with each other within the split sleeve 3. The projecting portions 26a, 26b contact with side surfaces of the flanges 8a, 8b, respectively, when the split sleeve 3 is accommodated in the accommodating space 19 as shown in Fig. 1B. Then, by the flanges 8a, 8b being pressed by elastic force in the X-axis direction, the pair of ferrules 2a, 2b are held. In addition, the cutout portions 27a, 27b permit insertion of the centering portions 6a, 6b of the pair of ferrules 2a, 2b therethrough.

As shown in Fig. 6, the protrusions 15a, 15b are formed on confronting surface of the extending portions 24 which confront grooves 11a, 11b when the split sleeve 3 is accommodated in the accommodating space 19. The protrusions 15a, 15b are fitted in the grooves 11a, 11b of the flanges 8a, 8b, respectively. By the protrusions 15a, 15b being fitted in the grooves 11a, 11b, respectively, the rotating positions of the flanges 8a, 8b are determined. The fitting of the protrusions 15a, 15b in the grooves 11a, 11b, respectively, will be described in detail later.

Setting of Number of Flanges and Grooves

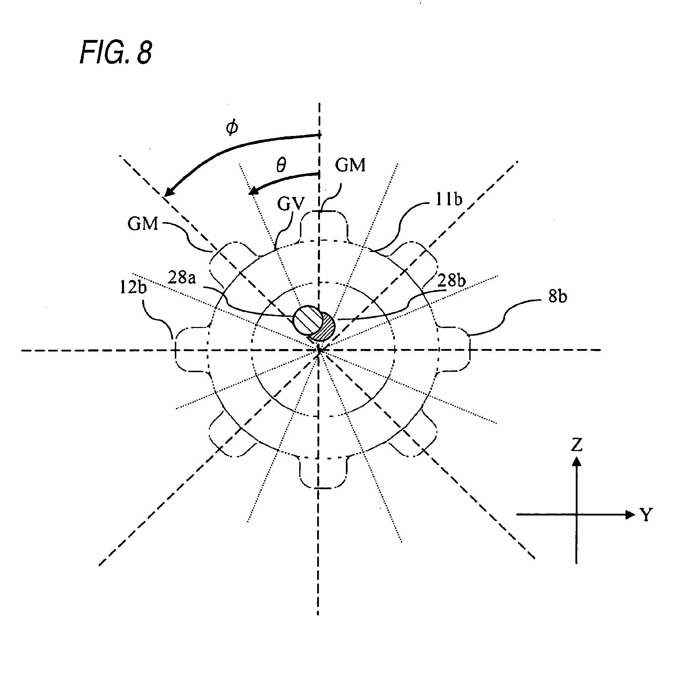

For the sake of simplification of the drawing, Figs. 7A to 7C show simplified constructions of the ferrules 2a, 2b and the split sleeve 3 with bodies 5a, 5b omitted. Fig. 8 shows only the flange 8b for the sake of simplification of the drawing. For the sake of simplification of the drawing, Fig.8 shows the flange portion 8b which includes eight grooves 11b and eight projecting portion 12b. However, in the embodiment shown in Fig. 3, the numbers of grooves 11a are 16. So are the numbers of grooves 11b and projecting portions 12a, 12b.

As shown in Fig. 7A, the pair of ferrules 2a, 2b are opposed to each other within the split sleeve 3, and the axis AXa of the ferrule 2a and the axis AXb of the ferrule 2a coincide with each other so as to constitute the single axis AX.

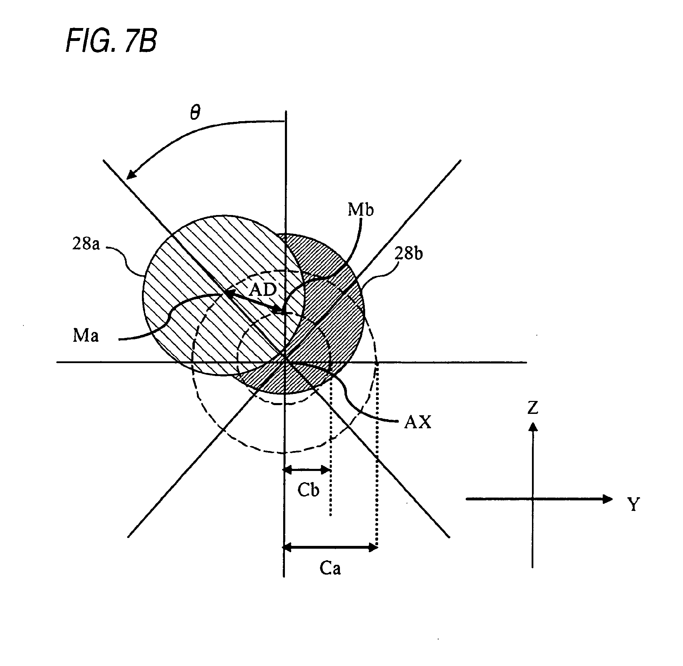

Fig. 7B shows rotating positions of the optical fibers 28a, 28b about respective core centers Ma, Mb thereof with respect to the axis AX when the ferrule 2a and the ferrule 2b are seen about the axis AX of respective. The optical fibers 28a, 28b have respective core eccentricity amounts Ca, Cb ($\mu$m) in accordance with the eccentricity of the respective core centers Ma, Mb from the axis AX. Assuming that an angle from the core center Mb to the core center Ma is $\theta$, an axis deviation amount AD ($\mu$m) of the pair of optical fibers 28a, 28b is calculated from the follow equation.

## Equation 1

$$AD = (Ca^2 + Cb^2 - 2 \cdot Ca \cdot Cb \cdot \cos \theta)^{1/2}$$

When the pair of ferrules 2a, 2b are connected with each other and the pair of optical fibers 28a, 28b are optically connected together, the light coupling efficiency CE is decreased by the eccentricities of the core centers Ma, Mb, whereby a connection loss CL is produced. In general, a connection loss CL (dB) in connection of optical fibers having the same mode field diameter is calculated by the following equation. Hereinafter, the mode field diameter is denoted by MFD. However, herein, BR denotes a beam radius ($\mu$m) which is defined as a half amount of MFD.
## Equation 2

$$CL = 10 \cdot Log \{exp \ (\cdot AD/BR^2)\}$$

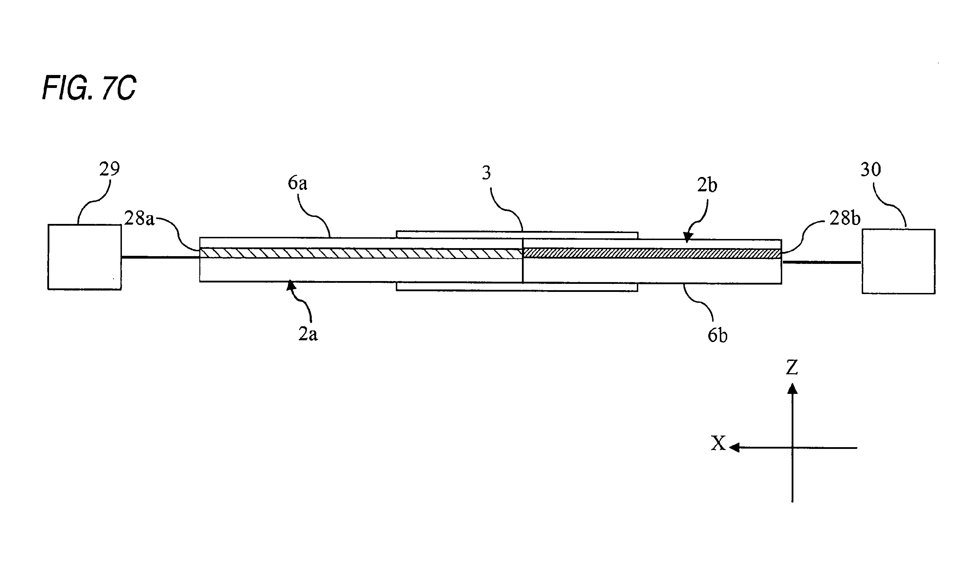

A connection loss CL of the optical fibers 28a, 28b is calculated by a measuring system shown in Fig. 7C. In Fig. 7C, light from a light source 29 is supplied into the ferrule connection mechanism 1 and is then supplied to an optical power meter 30 via the optical fibers 28a, 28b. With an output of the light source 29 kept constant, an optical power detected by the optical power meter 30 varies in accordance with the connection loss CL of the optical fibers 28a, 28b. Consequently, the connection loss CL of the optical fibers 28a, 28b can be calculated from the optical power detected by the optical power meter 30. The working person can identify a position having a least connection loss CL in a positional relationship between the ferrule 2a and the ferrule 2b by measuring a connection loss CL by the measuring system shown in Fig. 7C when carrying out an alignment of the ferrules 2a, 2b. In addition, the working person causes the split sleeve 3 to be accommodated in the accommodating space 19 in the position having the least connection loss CL, whereby by the protrusions 15a, 15b fitting in the grooves 11a, 11b, respectively, the rotating positions of the flanges 8a, 8b are determined. By the rotating positions being determined in this way, the ferrule 2a and the ferrule 2b are held in the position having the least connection loss CL, that is, a position having a largest connection efficiency CE.
Referring to Fig. 8, a relationship between the numbers GN of grooves 11a, 11b and the connection loss CL will be described when the pair of ferrules 2a, 2b are opposed to each other and connected with each other within the split sleeve 3 and the split sleeve 3 is accommodated within the accommodating space 19. As shown in Fig. 8, a relationship between the number GN of grooves 11b and an interval between the grooves 11b of the flange 8b, that is, a rotational angle $\Phi$ from a crest portion GM of the projecting portion 12b to an adjacent crest portion GM is expressed by the following equation.
## Equation 3

$$\Phi = 360/GN$$

The connection loss CL becomes largest either when the core center Ma is positioned at a crest portion GM of the projecting portion 12a and the core center Mb is positioned at a root portion GV of the groove portion 11b or when the core center Mb is positioned at the crest portion GM of the projecting portion 12b and the core center Ma is positioned at a root portion GV of the groove 11a. In either case, as shown in Fig. 8, a relationship between the angle $\theta$ from the core center Mb to the core center Ma and the rotational angle $\Phi$ of the pair of ferrules 2a, 2b is expressed as follows.
## Equation 4

$$\theta = \Phi/2$$

When substituting Equation 4 by Equation 3,
**[0044]**

$$\theta = 180/GN$$

When substituting Equation 1 by Equation 2 and Equation 5, Equation 6 is obtained which expresses a connection loss CL (dB) and the numbers GN of grooves 11a, 11b when the connection loss CL becomes largest.
## Equation 6

$$CL = 10 \cdot \text{Log} \{\exp (\cdot(Ca^2 + Cb^2 \cdot 2 \cdot Ca \cdot Cb \cdot \cos \theta)^{1/2}BR^2)\}$$

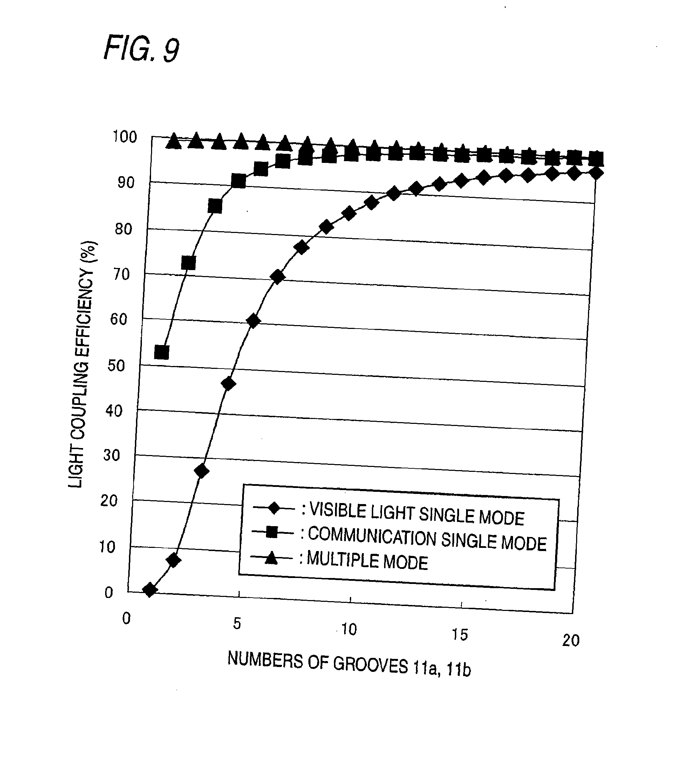

The result of a calculation of an light coupling efficiency CE using Equation 6 is shown in Fig. 9. As MFD of the optical fibers 28a, 28b, thee types of set values are used which include a visible light single mode fiber whose MFD is 3.5 $\mu$m, a communication single mode fiber whose MFD is 10.0 $\mu$m and a multiple mode fiber whose MFD is 100.0 $\mu$m. In Fig. 9, an axis of abscissa represents the numbers GN of grooves 11a, 11b and an axis of ordinates represents the light coupling efficiency CE (%). The core eccentricity amounts Ca, Cb of the optical fibers 28a, 28b are both set to Ca=Cb= 2 ($\mu$m).

As shown in Fig. 9, in any case of the visible light single mode fiber, the communication single mode fiber and the multiple mode fiber, it is seen that a larger light coupling efficiency CE can be obtained as the numbers GN of grooves 11a, 11b increase. In the visible single mode fiber, when the numbers GN of grooves 11a, 11b are four, the connection efficiency takes a small value of the order of 50%. This is because the connection loss CL becomes large due to MFD of the visible light single mode fiber taking the very small value compared with those of the other two optical fibers. However, even in the case of the visible light single mode fiber, as shown in Fig. 9, in the event that the numbers GN of grooves 11a, 11b are 12 or larger, the connection efficiency CE takes a larger value of 90% or lager. The working person performs a calculation using Equation 6 in advance and provides the numbers GN of grooves 11a, 11b which can obtain an light coupling efficiency of 90% or lager on the flanges 8a, 8b, thereby making it possible to obtain a high connection efficiency CE. In this embodiment, 16 grooves 11a, 11b are provided individually on the flanges 8a, 8b, so as to obtain an light coupling efficiency of almost 100%.

## Description of Operation

The operation of the ferrule connecting structure 1 according to the embodiment will be described by use of the drawings. The pair of ferrules 2a, 2b include the flanges 8a, 8b which are provided with the numbers GN of grooves 11a, 11b set according to the method described above. The pair of ferrules 2a, 2b are opposed to each other and connected with each other in the split sleeve 3. The optical fibers 28a, 28b which are provided in the ferrules 2a, 2b, respectively are optically connected together.

Aligning the pair of ferrules 2a, 2b will be described. A calculation of a connection loss CL is carried out based on the method described above using the measuring system shown in Fig. 7C. Specifically, a position having a least connection loss CL, that is, a position having a largest light coupling efficiency is identified while rotating the pair of ferrules 2a, 2b within the split sleeve 3, and the pair of ferrules 2a, 2b are held in that position within the split sleeve 3, whereby the alignment of the pair of ferrules 2a, 2b is completed.

The split sleeve 3 is accommodated within the accommodating space 19 in the clamp 4 with the pair of ferrules 2a, 2b kept opposed to each other and connected with each other within the split sleeve 3 after the alignment of the ferrules has been completed. When the split sleeve 3 is accommodated within the accommodating space 19 in the clamp 4, there may occur such a situation that the protrusions 15a, 15b on the clamp 4 do not fit in the corresponding grooves 11a, 11b on the flanges 8a, 8b but are brought into contact with the projecting portions 12a, 12b of the flanges 8a, 8b. As this occurs, after the contact of the projecting portions 12a, 12b with the protrusions 15a, 15b, the protrusions 15a, 15b are caused to deviate slightly from the projecting portions 12a, 12b while kept in contact therewith, whereby the protrusions 15a, 15b are caused to fit in the corresponding grooves 11a, 11b. Since the numbers GN of grooves 11a, 11b on the flanges 8a, 8b are set in advance so as to obtain a large light coupling efficiency CE, the slight deviation of the projecting portions 12a, 12b from the protrusions 15a, 15b after contact affects little the light coupling efficiency CE. The protrusions 15a, 15b are fitted in the corresponding grooves 11a, 11b of the clamp 4, and the flanges 8a, 8b are pressed in the direction in which the pair of ferrules 2a, 2b are opposed to each other and connected with each other by the pressing portion 14, whereby assembling work of assembling the pair of ferrules 2a, 2b in the split sleeve 3 and on to the clamp 4 is completed.

Disassembling work of the ferrule connecting structure 1 will be carried out as follows. The working person grips on the split sleeve 3 and the clamp 4 with both of his or her hands to remove the split sleeve 3 from the accommodating space 19 of the clamp 4. Next, the working person grips on the split sleeve 3 and the body 5a of the ferrule 2a to pull the ferrule 2a out of the split sleeve 3. Next, similarly, the working person pulls the ferrule 2b out of the split sleeve 3. In this way, the disassembling work of the ferrule connecting structure can be implemented extremely easily without carrying out labor hour consuming work of cutting apart the optical fibers 28a, 28b.

Application Example of Embodiment

An application of the ferrule connecting structure 1 according to the invention to a retina scanning display will be described. A retina scanning display is one form of a head-mounted display device. The retina scanning display is mounted on a head portion of a person who wears it or in the vicinity of the head portion so as to guide an image light to the eyes of the person who wears the same display. The retina scanning display is configured so that by scanning the retina in two-dimensional directions thereover, an image corresponding to contents information is visualized by the person who wears the retina scanning display.

The retina display system includes a light source part, a light transmission part and a wave combining part. The light source unit includes three image light generating portions which generate individually respective image lights including red, blue and green lights. The light transmission part is provided one for each of the image light generating part. The light transmission part includes a condensing lens, the pair of ferrules, a light source portion side optical fiber 28a and a wave combining part side optical fiber 28b. The condensing lens concentrates the image light emitted from the image light generating portion on to the optical fiber 28a. The optical fiber 28a is provided within the ferrule 2a. The optical fiber 28b is provided in the ferrule 2b. The image light concentrated to the optical fiber 28a by the condensing lens is supplied to the wave combining part via the optical fibers 28a, 28b. The wave combining part combines the image lights which are supplied via the respective optical fibers 28a, 28b.

When the light source part fails, it is extremely difficult to replace only the failed light source portion within a housing of the retina scanning display and thereafter align the optical axis of a replacement light source part. Because of this, normally, a light source part for each image light, a condensing lens and an optical fiber 28a are assembled individually as one unit in advance. Then, the ferrule connecting structure 1 is used in connecting a centering portion 6a of a ferrule 2a which is provided at a leading end of the three units with a centering portion 6b of a ferrule 2b which is connected with a wave combining part. By adopting this configuration, when the light source part fails, requiring the light source part to be replaced, the ferrule connecting structure 1 is disassembled in the way described above for replace of the failed light source part as a unit. In contrast to this, in the event that the ferrules 2a, 2b are bonded together, the following labor consuming work has to be carried out in which the optical fibers are cut apart, the wave combining part is removed from the housing, the optical fiber 28b at the wave combining part is passed through a new ferrule 2b, and leading ends of the ferrules 2a, 2b are ground, thereafter, the ferrules 2a, 2b being bonded together again. In the event that the light source part, the condensing lens and the optical fiber 28 are not assembled as a unit, in addition to the work described above, some labor hours have to be spent in inserting the optical fiber 28a on the light source part side through the ferrule 2a. In the event that the optical fibers are cut every time light source parts are replaced, there is caused a problem that the optical fibers get shorter every replacement. However, by applying the ferrule connecting structure 1 according to the embodiment to the retina scanning display, the labor hours do not have to be spent which would otherwise be required for the pair of ferrules 2a, 2b which are bonded together, and the working person is allowed to easily replace the failed light source part.

Advantageous Effects of the Embodiment

The rotating positions of the ferrules 2a, 2b about the axis AX of the optical fibers 28a, 28b are held by the protrusions 15a, 15b. The split sleeve 3 is pressed in the direction in which the split sleeve 3 approaches vertically the axis AX by the holding portion 13. The pair of ferrules 2a, 2b are pressed in the direction in which the connecting end faces of the pair of ferrules 2a, 2b confront each other by the pressing portion 14.

Consequently, the pair of ferrules 2a, 2b is held while confronting each other from two directions, the direction perpendicular to the axis AX by the holding portion 13 and the direction in which the connecting end faces of the pair ferrules 2a, 2b are opposed to each other and connected with each other by the pressing portion 14. Therefore, the holding condition after assembling of the ferrule connecting structure 1 is maintained in an ensured fashion.

The rotating positions of the ferrules 2a, 2b are maintained by the protrusions 15a, 15b. Consequently, the post-aligning condition is maintained in an ensured fashion, thereby high light coupling efficiency being maintained.

As a result, even in the event that the connecting portion between the pair of ferrules 2a, 2b is not bonded, the high light coupling efficiency is maintained. The working person is freed from labor hour consuming work of cutting apart once the optical fibers 28a, 28b in replacing the device coupled to the ferrules 2a, 2b or the ferrules 2a, 2b themselves.

The rotating positions of the ferrules 2a, 2b around the axis AX of the optical fibers 28a, 28b are set finely in accordance with the numbers GN of groove 11a, 11b provided on the flanges 8a, 8b.

The numbers GN of grooves 11a, 11b are determined in advance based on the light coupling efficiency of the optical fibers 28a, 28b. Thus, desired light coupling efficiency CE is obtained.

The flanges 8a, 8b are provided on the pair of ferrules 2a, 2b, respectively. Thus, the rotating positions are set for both of the pair of ferrules 2a, 2b and the rotating positions so set are then held. Consequently, the high light coupling efficiency CE is obtained in a more ensured fashion. Accordingly, the high light coupling efficiency is maintained in a more ensured fashion.

The split sleeve 3 is pressed to be held by the third plate portion 18 in such a state that the split sleeve 3 is positioned in the predetermined position by the first surface 21 and the second surface 22 within the accommodating space 19. Consequently, the holding of the split sleeve 3 is ensured, thereby making it possible to prevent an abrupt movement of the split sleeve 3 after assemblage of the ferrule connecting structure.

The working person can insert the ferrules 2a, 2b in the cutout portion while maintaining the condition in which the pair of ferrules 2a, 2b are left opposed to each other and connected with each other within the split sleeve 3. Consequently, the pressing portion 14 can be mounted on the flanges 8a, 8b without any problem.

The working person can fit the protrusions 15a, 15b in the grooves 11a, 11b of the flanges 8a, 8b which the protrusion 15a, 15b confront when the split sleeve 3 is accommodated within the accommodating space 19 with the pair of ferrules 2a, 2b made to confront each other within the split sleeve 3. Consequently, the working person can easily achieve the maintenance of the condition in which the pair of ferrules 2a, 2b are made to confront each other and the setting of the rotating positions of the ferrules 2a, 2b.

The protrusions 15a, 15b, the third holding portion 13 and the pressing portion 14 are combined as an integral unit. Consequently, the fabrication process is simplified and a reduction in costs can be realized. In addition, compared with the ferrule connecting structure in which such three holding members are configured as separate members, the holding members which are combined as an unit is mounted on the ferrules 2a, 2b. Consequently, three different holding actions are completed simultaneously, whereby the holding work by the working person becomes simple and easy.

Modified Example

In the embodiment, while the holding portion 13, the pressing portion 14 and the protrusions 15a, 15bb are fabricated integrally, the invention is not limited thereto. For example, any of those members may be formed as a separate member, or all these members may be formed as separate members. For example, only the holding portion 13 is formed as a separate member, which is configured to be mounted on the extending portion 24 of the pressing portion 14.

In the embodiment, while the split sleeve 3 is made of zirconia and the clamp 4 of iron, the invention is not limited thereto. Any material may be used as long as it is a member having elasticity.

In the embodiment, while the flanges 8a, 8b are formed integrally with the bodies-5a, 5b, respectively, the invention is not limited thereto. The flanges 8a, 8b may be formed separately from the bodies 5a, 5b. As this occurs, the working person needs to perform work of bonding the flanges 8a, 8b to the bodies 5a, 5b, respectively.

In the embodiment, while the flanges 8a, 8b are provided on both of the pair of ferrules 2a, 2b, the invention is not limited thereto. A flange may be provided only either of the pair of ferrules 2a, 2b.

In the embodiment, the numbers GN of grooves 11a, 11b are 16. The invention is not limited thereto. The numbers of grooves 11a, 11b may be, for example, 10 or 20, provided that relatively high light coupling efficiency is obtained.

In the embodiment, while the holding portion 13 includes the first plate portion 16 the second plate portion 17 and the third plate portion 18 and the split sleeve 3 is held by these three members, the invention is not limited thereto. For example, the holding portion 13 may include another third plate portion, not shown, in place of the second plate portion 17. As this occurs, when the split sleeve 3 is accommodated in the accommodating space 19, the split sleeve 3 is pressed in a direction in which the split sleeve 3 approaches vertically the axis AX of the pair of ferrules 2a, 2b by the elastic force of the third plate portion 18 and the additional third plate portion and is then held in that position.

**Claims**

1. A ferrule connecting structure for optically connecting a pair of fibers which are provided in a pair of ferrules, respectively, the ferrule connecting structure comprising:

   a first holding portion which holds the pair of ferrules in a state that end faces of the pair of ferrules are opposed to each other and connected with each other;
   a peripheral portion which is provided on at least one of the pair of ferrules and which includes an peripheral surface on which a plurality of groove portions are formed;
   a second holding portion which is configured to fit in the groove portion so as to hold the ferrule in a particular rotating position about an axis of the optical fiber;
   a third holding portion which is configured to be detachably attached to the first holding portion so as to press the first holding portion by elastic force in a direction which intersects with the axis; and
   a fourth holding portion which presses the pair of ferrules by elastic force in a direction in which the end faces of the pair of ferrules are opposed to each other.

2. The ferrule connecting structure according to claim 1, wherein the peripheral surface of the peripheral portion has a shape in which the plurality of groove portions and a plurality of projecting portions are formed alternately.

3. The ferrule connecting structure according to claim 2, wherein the number of the plurality of groove portions is predetermined based on an light coupling efficiency of the optical fibers.

4. The ferrule connecting structure according to any one of claims 1 to 3, wherein the peripheral portion is provided on both of the pair of ferrules.

5. The ferrule connecting structure according to any one of claims 1 to 3, wherein
   the third holding portion includes an accommodating portion having an accommodating space for accommodating the first holding portion, and
   the accommodating portion comprises:

   a first plate portion which has a first surface, wherein the first surface extends along the axis and is configured to contact with a peripheral surface of the first holding portion;
   a second plate portion which has a second surface, wherein the second surface stands on one side end of the first plate portion, wherein the second surface extends along the axis, and wherein the second surface is configured to contact with the peripheral surface of the fist holding portion; and
   a third plate portion which has a curved surface, wherein the curved surface stands on the other side end of the first plate portion, wherein the curved surface projects toward the second surface, and wherein the curved surface extends along the axis, and wherein the curved surface is configured to contact with the peripheral surface of the first holding portion.

6. The ferrule connecting structure according to claim 5, wherein
   the fourth holding portion includes:

   a pair of extending portions which extend from both sides of the accommodating portion along the axis; and
   a pair of pressing pieces which stands on the pair of extending portions respectively, wherein the pair of pressing pieces is configured to contact with side surfaces of the pair of peripheral portions to press the pair of peripheral portions provided on both of the pair of ferrules in the direction in which end faces of the pair of ferrules are opposed to each other, and
   each of the pair of pressing pieces includes a cutout portion which permits insertion of the ferrule when the first holding portion is accommodated within the accommodating space.

7. The ferrule connecting structure according to claim 6, wherein
   the extending portion includes a confronting portion which confronts the groove portion when the third holding portion is accommodated in the accommodating space ,and
   the second holding portion includes a protrusion which is formed on the confronting surface of the extending portion, and wherein the protrusion is configured to fit in the groove portion.

8. The ferrule connecting structure according to claim 5, wherein
   the peripheral portions are provided on both of the pair of ferrules, respectively, and
   the second holding portion, the third holding portion and the fourth holding portion are combined as an unit.

9. The ferrule connecting structure according to any one of claims 1 to 3, wherein the first holding portion is a split sleeve.

10. The ferrule connecting structure according to any one of claims 1 to 3, wherein the third holding portion presses the first holding portion in a direction perpendicular to the axis.

11. The ferrule connecting structure according to claim 5, wherein
    the first surface extends parallel to the axis,
    the second surface is perpendicular to the first surface, and wherein the second surface extends parallel to the axis, and
    the curved surface extends parallel to the axis.

## FIG. 1A

## FIG. 1B

FIG. 2

FIG. 3

## FIG. 4A

## FIG. 4B

FIG. 4C

FIG. 5

FIG.6

FIG.7A

*FIG. 7B*

FIG. 7C

# FIG. 8

FIG. 9

## FIG. 10

Europäisches
Patentamt

European
Patent Office

Office européen
des brevets

# EUROPEAN SEARCH REPORT

**Application Number**

EP 10 25 0501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/081909 A1 (TAIRA JUNJI [JP])<br>1 May 2003 (2003-05-01)<br>* paragraph [0110] - paragraph [0132];<br>figures 8A-B, 9A-B *<br>* paragraph [0133] - paragraph [0145];<br>figures 10A-B * | 1-4,6,9 | INV.<br>G02B6/38 |
| A | EP 1 443 350 A2 (PANDUIT CORP [US])<br>4 August 2004 (2004-08-04)<br>* paragraph [0012] - paragraph [0024];<br>figures 1-10 * | 1-4 | |
| A | US 6 095 694 A (CHUDOBA PAUL [US] ET AL)<br>1 August 2000 (2000-08-01)<br>* column 2, line 52 - column 3, line 50;<br>figures 1-3 * | 1,9,10 | |
| A | EP 0 636 910 A1 (AT & T CORP [US])<br>1 February 1995 (1995-02-01)<br>* column 5, line 16 - column 7, line 38;<br>figures 1-4 * | 1,5,10 | |
| A | US 4 741 590 A (CARON BERNARD G [US])<br>3 May 1988 (1988-05-03)<br>* column 2, line 42 - column 5, line 51;<br>figures 1-9 * | 1,6 | TECHNICAL FIELDS<br>SEARCHED (IPC)<br><br>G02B |

The present search report has been drawn up for all claims

| Place of search | Date of completion of the search | Examiner |
|---|---|---|
| Berlin | 6 July 2010 | A. Jacobs |

## ANNEX TO THE EUROPEAN SEARCH REPORT
## ON EUROPEAN PATENT APPLICATION NO.

EP 10 25 0501

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2010

| Patent document cited in search report | | Publication date | Patent family member(s) | | Publication date |
|---|---|---|---|---|---|
| US 2003081909 | A1 | 01-05-2003 | CN<br>WO<br>JP | 1602437 A<br>03034119 A1<br>2003185881 A | 30-03-2005<br>24-04-2003<br>03-07-2003 |
| EP 1443350 | A2 | 04-08-2004 | AT<br>CN<br>JP<br>US | 428948 T<br>1519602 A<br>2004234008 A<br>2004151437 A1 | 15-05-2009<br>11-08-2004<br>19-08-2004<br>05-08-2004 |
| US 6095694 | A | 01-08-2000 | NONE | | |
| EP 0636910 | A1 | 01-02-1995 | DE<br>DE<br>JP<br>US | 69413623 D1<br>69413623 T2<br>7306328 A<br>5384876 A | 05-11-1998<br>20-05-1999<br>21-11-1995<br>24-01-1995 |
| US 4741590 | A | 03-05-1988 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2001215360 A